(19) Europäisches Patentamt
European Patent Office
Office européen des brevets

(11) Publication number: **0 153 106**
**A2**

# (12) EUROPEAN PATENT APPLICATION

(21) Application number: 85300855.5

(22) Date of filing: 08.02.85

(51) Int. Cl.⁴: G 06 F 9/44

(30) Priority: 10.02.84 US 578801

(43) Date of publication of application: 28.08.85 Bulletin 85/35

(84) Designated Contracting States: AT BE CH DE FR GB IT LI LU NL SE

(71) Applicant: PRIME COMPUTER, INC., Prime Park, Natick Massachusetts 01760 (US)

(72) Inventor: Turner, Prescott K., 13 Burning Tree Road, Natick Massachusetts 01760 (US)

(74) Representative: Blatchford, William Michael et al, Withers & Rogers 4 Dyer's Buildings Holborn, London EC1N 2JT (GB)

## (54) Retargetable code generator using up/down parsing.

(57) A compiler for generating an assembly language listing of instructions for a programmable data processor from a high level programming language has elements for generating from the high level programming language input, an intermediate representation of the programming language input and for generating from the intermediate representation, an assembly language representation of the high level programming language input. The compiler operates generally in accordance with the Glanville-Graham method which enables the compiler to be used with different machines. The resulting retargetable compiler is improved by employing an up/down parsing method in the code generator portion which removes significant restrictions found when LR parsing is employed. The parsing method allows preprocessing of the prefix grammer representing the input intermediate representation for producing, for use by the code generator parsing element, a state table, an extended state table, and a state transition table.

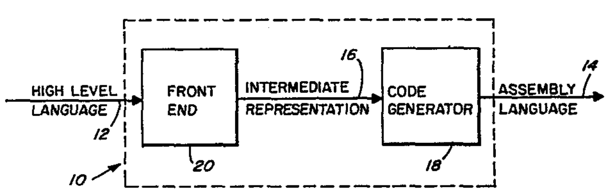


EP 0 153 106 A2

RETARGETABLE CODE GENERATOR USING UP/DOWN PARSING

The invention relates generally to data processing apparatus and methods, and in particular, to a data processing compiler apparatus and method.

As the data processing and computer fields mature, there exists an increasing gap between the capability of creating high level programming languages on the one hand, and compilers to effect the efficient conversion of the programming language to machine assembly language. Basic to this gap is the substantial time commitment required to create a compiler for converting a specific high level language to a machine-specific assembly language. The assembly language corresponds, substantially one-to-one, to the computer's instruction set. More importantly, the capability of creating efficient compilers in a routine manner has proved an even greater obstacle since, in the past, the efficiency of the compiler has been in part directly related to the amount of time and effort spent in creating it.

A major step forward in compiler technology is described in a paper by Glanville and Graham, "A New Method for Compiler Code Generation", presented at the Fifth Annual ACM Symposium on Principles of Programming Languages, January, 1978, pp. 231-240, the contents of which are

incorporated herein by reference. The compiler structure discussed in the Glanville and Graham paper relates to that class of compiler methods in which a code generator operates upon an intermediate representation of a higher level programming language for generating an assembly language listing. The code generator receives information about the data processing apparatus (the machine description), and uses that description about the target machine to generate the assembly language listing. Using this system, a single code generator can be constructed for different machines. This is called retargeting of the compiler and is effected by changing the portions of the compiler which are directly related to the machine language. (Correspondingly, the machine language is directed to the particular architecture of the computer to which it is being applied.)

The Glanville and Graham method provides a significant advance toward making a retargetable compiler. That method however has several difficulties including in particular, restriction to uniform prefix grammars.

It is therefore an object of the invention to modify the Glanville and Graham method to provide a more flexible method for compiling a high level

programming language using a retargetable compiler code generation method and structure. Other objects of the invention are a compiler having an improved parsing method and apparatus and less restrictions in handing an intermediate language structure.

Summary of the Invention

The invention relates to a compiler for generating, from a high level programming language, an assembly language listing of instructions for a programmable data processor. Tne compiler has elements for generating from the high level programming language input, an intermediate representation of the programming language input. Further, there are provided elements for generating, from the intermediate representation, the assembly language representation of the high level programming language input. According to the invention, the generating element features apparatus for generating an input tree structure having a plurality of nodes for representing the intermediate representation, an upward pass parsing element for assigning, in an upward pass of the tree structure, a state value for each node of the tree structure, a downward pass parsing element for parsing the intermediate representation during a downward pass through the

tree, the parsing element using the state values applied during the upward parsing pass, and elements responsive to the downward pass parsing element for generating the assembly language representation from the parsed intermediate representation.

In particular embodiments of the invention, the code generator has elements responsive to productions in a prefix grammar for generating a transition table. (The grammar constrains the class of intermediate representations.) The table includes for a plurality of entries, an operator identification, previous states of the immediate subtrees, and a resulting state at a tree node associated with the operator.

In another aspect, the invention relates to a code generator generator. The code generator generator features elements responsive to productions in a prefix grammar for generating a state transition table, the transition table including for a plurality of entries, an operator identification, previous states of the subtree leaves, and the resulting state at a tree node associated with the operator.

In another aspect, the method of the invention relates to generating from a high level programming language, an assembly

language listing of instructions for a programmable data processor. The method features the steps of generating from the high level programming language input a lower level intermediate representation of the programming language input and generating from that intermediate representation the assembly language listing representing the high level programming language input. The assembly language generating step further features the steps of generating an input tree node structure for the intermediate representation, parsing that intermediate representation by first assigning to the tree node structure, in an upward parsing pass, a state value for each of the nodes of the node structure and parsing the intermediate representation during a downward pass through the tree structure, the downward parsing pass employing the state values assigned during the previous upward parsing pass. The method further features generating the assembly language listing from the parsed intermediate representation.

In another aspect, the method relates to generating input data tables for a code generator for use in a compiler for generating from a high level programming language, an assembly language listing of instructions for a programmable data processor. The compiler has elements for generating from the high level programming language

input an intermediate representation of the programming language input, the intermediate representation having a prefix grammar and represented by a canonical tree having a plurality of nodes. This aspect of the method features the steps of responding to productions for the prefix grammar and generating, in response to the productions, a state table, an extended state table, and a state transition table. The state transition table includes, for each of a plurality of entries, an operator identification, previous states of the subtree leaves, and the resulting state at a current tree node associated with the operator.

## Brief Description of the Drawings

Other objects, features, and advantages of the invention will appear from the following description of a preferred embodiment taken together with the figures in which:

Figure 1 is a schematic block diagram illustrating the general structure of the compiler according to the invention;

Figure 2 is a state transition table for the example described herein;

Figures 3a-3d represent a parsing example using a tree structure;

Figure 4 is a more detailed flow diagram illustrating the preprocessing element and the code generator structure; and

Figure 5 is a flow diagram illustrating the general flow of data through the code generator of Figure 1.

Description of a Preferred Embodiment

Referring to Figure 1, a compiler according to the invention operates upon a sequence of symbols which forms a high level programming language and which are available over a line 12. The compiler 10 provides to the computer a machine level assembly language output available over a line 14. The translation from the high level programming language to the assembly language takes place, according to the preferred embodiment of the invention, in two steps. In a first step, the high level language is translated by a compiler front end 20 into an intermediate representation, that is, a lower level language. This is available over a line 16. During the second step, the lower level intermediate representation available over line 16 is translated into assembly language by a code generator 18. The front end 20 of the compiler of Figure 1 is of a well known structure, for example that described in the Glanville and Graham paper noted above, and provides, as its intermediate representation, a language which can be

represented in a prefix grammar. It is to this type language that the Glanville and Graham method is designed to apply. In particular, the Glanville and Graham method employs LR parsing in the code generator 18 for providing a retargetable compiler. Code generator 18 provides the "translation" from the intermediate representation over line 16 to assembly language. The heart of the present invention is to provide a different and improved code generator using a table-driven method of parsing prefix grammars, the method being designated "up/down parsing". The disclosed method of parsing enables one to provide greater flexibility for handling a wider range of prefix grammars because, unlike the Glanville and Graham LR approach, the grammar need not be "uniform" as defined in the Glanville and Graham paper.

The up/down parsing method employs a preprocessor 30 (Fig. 4) which constructs tables of states, extended states, and state transitions from prefix grammar defined productions. The method views each string derivable in a prefix grammar in a canonical tree representation. Viewing the string as a tree, the method then parses the input strings in two passes (see Fig. 5), a first pass proceeding up the tree, that is, starting at the leaves of the tree, and a second pass proceeding down the tree from the root. In

the first pass, each node of the tree is marked with a state as described below. In the second pass, a production is recognized for the goal symbol based upon the state number at the root of the tree and thereafter the second pass continues down the tree by repeatedly recognizing a production for each nonterminal leaf of the parsed tree as so far constructed. The downward parse advantageously employs the previously assigned states to remove possible ambiguities and to avoid "blocking". The latter is a complexity with the Glanville and Graham method using LR parsing.

Each state which marks a tree node is a subset of the set of prefix expressions which appear in the right-hand sides of the grammar as a grammar is ordinarily viewed. These states are sets of items relating to the grammar. An item, in this parsing method, is a prefix expression which forms all or part of a right-hand side in the grammar starting with a terminal symbol.

For example, consider a prefix grammar having the following productions:

```
stmt   ::=  = k r
r    ::=  + r - k
r    ::=  + s k                         (Eq. 1)
s    ::=  r
r    ::=  k
```

where the goal symbol is "stmt", the terminals or operators are [k,+,-, =] the unary operator is [-],

the binary operators are [+,*], and the operand terminal is [k].

The allowable items for this grammar are:

k

* k r

- k (Eq. 2)

+ r - k

+ s k

The state marking a particular tree node will then contain precisely those items which can derive, through zero or more steps, the string of terminals corresponding to the subtree in question. Since there are five items in this example, there are thirty-two potential states ($2^5$). Most of these do not correspond to terminal strings, such as the state [k,-k]. A state will therefore be called "useful" if it is a state marking a tree node corresponding to at least one actual prefix expression of terminals. Note that the empty state can be useful in the above example since it corresponds to the terminal string "-- k". As will be described below, to each state there corresponds what is designated an extended state which also includes the nonterminals and which can derive the string of terminals. The extended state thus gives the set of items and non-terminals which can derive the string of terminals.

The parsing method described herein is

completely table-driven. The preprocessor constructs the table of states, the extended states, and a state transition table from the productions (which depend upon the target machine description) as described below. The state table is generated by starting with states which correspond to the operand terminal symbols and continuing to compute more states by combining each operator with the states determined so far, until no more states are created. As each combination of operator and operand states is formed, the combination, along with its resulting extended state, is saved in the transition table and the resulting extended state is added, if necessary, to the extended state table.

Upward Pass Through the Input Tree

The upward or "Decorate" parsing pass works up from the leaves of the tree to the root of the tree, marking each node, as noted above, with a state. By looking in the preprocessed transition table for the operator or leaf terminal at the current node, together with its operand extended states (derived from the states already assigned in the subtrees of the current node), the state of the current node can be determined.

Assuming a fixed grammar, the State corresponding to a node is computed locally, based only upon the operator at the node and the extended

states of the subtrees. For an item to be in the state of a "current" node, it must start with the operator at the current node. Given the matching operator, an item will then derive the proper string of terminals if and only if each operand of the operator (in the item's prefix expression) is in the extended state of the corresponding subtree. The extended state of a node can also be computed locally, since it is based only on the grammar and the state of the node itself. Each non-terminal will derive the proper string of terminals, if and only if it derives one of the items in the extended state.

Tabulated Computation of States

The state calculation is done in the context of a node in an input tree. The only dependencies on the tree are the operator at the current node and the states of the subnodes (or subtrees). Since the number of possible states and operators is determined by the grammar to be finite, all possible state calculations can be performed ahead of time, in a preprocessor 30 (Fig. 4) independent of the particular input tree. This is what is meant by "table-driven". By assigning a number to each state the result of the calculations can be put into tables (over lines 32, 34, 36 (Fig. 4)) in a relatively compact way and the resultant state tables can be used for efficient parsing. The

"useful" states can be obtained in a straightforward manner by starting with those states corresponding to an operand terminal symbol and continuing to compute more states by combining each operator with the states so far determined until no more states are created. This process, using the grammar of Equation 1, provides the following useful states:

| | state table | extended state table |
|---|---|---|
| 1 | [k] | [k, r, s] |
| 2 | [- k] | [- k] |
| 3 | [] | [] |
| 4 | [+ s k] | [+ s k, r, s] |
| 5 | [+ r - k] | [+ r - k, r, s] |
| 6 | [= k r] | [= k r, stmt] |

Note that the numbers 1 through 6 have been arbitrarily assigned to the states. As noted above, the extended state table is derived locally from the grammar of Eq. 1 and the state of the node.

At the same time that the extended states are created, a transition table is also produced (see Fig. 2). According to the transition table of Fig. 2, if the current operator is "+", the left subtree is marked with state 4 and the right subtree with state 1, then the current subtree gets marked with state 4 using the entry "+ 4 1 4".

Downward Pass

Once each node has been marked with its state, it is easy to produce a parse of the input. A parse will exist whenever the root of the tree is marked with an extended state containing the goal symbol. If the root is marked with an empty state the parse fails.

In the description which follows, it is important to note the distinction between nodes of the input tree and nodes of the parsed tree.

Start a queue (or stack) of the input tree node-parse node pairs to be processed, initializing it to contain the root of the input tree and an incomplete parse tree consisting of just the goal symbol. Processing such a pair will output the section of the parse tree rooted at the given node and deriving, as far as the next production containing the terminal symbol of the input tree node.

Note that every production not containing a terminal has only a single nonterminal in the right-hand side. The first part of this derivation is a (possibly empty) chain of derivations of nonterminals from the nonterminal at the given parse node to some nonterminal which can immediately derive one of the prefix expressions in the state at the given input node. To this is added the derivation of this prefix expression from the nonterminal at the end of the chain. To

complete the processing, every nonterminal in the final derivation is added to the queue, along with the corresponding subtree. An example follows:

Parsing Example

Consider the input string, in prefix notation,

"= k + k k",

which corresponds to the tree of Fig. 3a. We can compute the states of the leaves, referring to Equation 3 above, as being, for each leaf, state 1. This is the beginning of the upward pass and is shown in Fig. 3b. Then the state computation for the node labeled "+" can be performed using the transition table entry "+ 1 1 4". The node "+" then belongs to state 4 and the result is shown in Fig. 3c. Finally, the state for the "=" node can be determined using the transition table entry "= 1 4 6" and the resulting tree is illustrated in Fig. 3d.

This completes the upward parsing pass. Note that the extended state for state 6, the root of the tree, includes the goal "stmt". The downward pass starts with a partial parse tree and a queue of nonterminal-subtree pairs. The numbers appearing in this pass serve to distinguish the nonterminals in the parse tree.

Parse tree: stmt[101]

(Eq. 3)

```
Queue:   nonterminal    subtree
 101          =             k + k k
```

The state for the subtree is state 6 which has the prefix expression "= k r" and can be derived immediately from "stmt". It can then be recognized that this is a production and a pair can be added to the queue for the nonterminal "r". Thus, we have

```
Parse tree:   stmt [101]
              |   \     \
              =   k      r[102]

Queue:   nonterminal     subtree
                  102      + k k
```

The state for the subtree is 4 which has a prefix expression "+ s k" and can be derived immediately from "r". Therefore it is recognized as a production and a pair is added to the queue for the nonterminal "s". The parse tree and queue then look like:

```
Parse tree:    stmt[101]
              /   \    \
             =     k   r[102]
                      /  |   \
                     +   |    k
                         |
                       s[103]

Queue:  nonterminal    subtree
                103       k
```

The state of the subtree is then 1 which has the prefix expression "k" and can be derived immediately from "s". This is therefore recognized as a production. Nothing needs to be added to the

queue so we are finished and the final parse tree is as follows:

Parse tree:

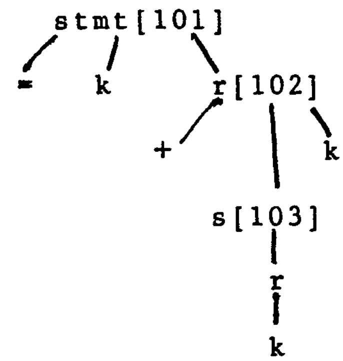


Since the method works on the basis of two traversals of the parse tree, each having one visit to each node and involving only a simple local computation, the method of clearly works in a time which is directly proportional to the size of the input. Furthermore, the correctness of the method and its applicability for any prefix grammar are consequences of the definitions of state and extended state.

Since the code generator 18 of Figure 1 derives substantially solely from the tables prepared prior to actual code generation, the disclosed method and apparatus provide means for generating those tables based upon the prefix grammar of the intermediate representation (Fig. 4). Once the state tables and the state transition table have been prepared, according to the invention, the incoming prefix grammar representation, when viewed as a tree structure, can be parsed using the disclosed invention. (See

also the flow chart of Fig. 5) The result of the parsing can then be passed and employed within the code generator to generate the assembly language code in a manner similar to that used by Glanville and Graham. In particular, the code generator 18 employs a machine description file over 38 which is written in a format derived from those of Glanville (Glanville, R.S., "A Machine Independent Algorithm for Code Generation and Its Use in Retargetable Compilers", PhD Thesis, Univ. of Cal.-Berkley, 1977) and Ganapathi (Ganapathi, M., "Retargetable Code Generation and Optimization Using Attribute Grammars", PhD Thesis, Univ. of Wisc.-Madison, 1980). Both of the last referred to references are incorporated herein by reference. Grammar rules specify the machine instructions and addressing modes to be emitted by the code generator 18 as it parses the source program's intermediate representation tree. The machine description file includes explicit productions that specify loading from, operating on, and storing into memory temporaries. When the code generator is employed for different machines therefore, the machine description must be changed. However, once the new machine description is provided, the production of the code generator is straightforward using revised

state and transition tables, which will be prepared for the intermediate representation.

A typical machine description file can specify, for example, the machine registers, relationships between those registers such as equivalence and overlapping, how to allocate memory temporaries, addressing modes, that is, nonterminal grammar symbols representing the components out of which complete instructions are constructed, instructions including a production whose left-hand symbol is a register, an addressing mode, a temporary, or a goal symbol (representing a complete statement) and whose right-hand side is a prefix expression (a nonterminal grammar symbol or an operator followed by a fixed number of operands), zero or more context restrictions on the attributes of grammar symbols, zero or more macro invocations, each of which emits an instruction or part of an instruction, and macros which describe machine instructions and machine instruction components.

The code generator 18, after the up parsing 40 and down parsing 42 have been completed, thus provides a code generation pass 44 that applies the code generation macros associated with the productions selected during the parsing stage and emits the machine code.

CLAIMS:

1. In a compiler for generating, from a high level programming language, an assembly language listing of instructions for a programmable data processor, said compiler having

first means for generating from said high level programming language input, an intermediate representation of the programming language input, and

second means for generating, from said intermediate representation, an assembly language representation of the high level programming language input, the improvement wherein said second generating means comprises

third means for generating an input node structure having a plurality of nodes for representing said intermediate representation,

upward pass parsing means for assigning, in an upward pass of said tree structure, a state value for each said node of said tree structure,

downward pass parsing means for parsing said intermediate representation during a downward pass through said tree, said parsing means using said state values during said downward pass, and

means responsive to said downward pass parsing

means for generating said assembly language representation from said parsed intermediate representation.

2. The generation means of claim 1 further wherein

said intermediate representation is a prefix grammar, and

said upward pass parsing means is responsive to a state transition table.

3. The generation means of claim 2 further comprising

a code generator generator means for generating said transition table, said code generator generator means having

means responsive to productions for said prefix grammar for generating a state table and an extended state table for said code generator,

means responsive to said state tables for generating said transition table, and

said code generator being responsive to a machine description for said machine,

said transition table including for each of a plurality of table entries, an operator identification, previous states of subtree leaves,

and a resulting state at a current tree node associated with said operator.

4. For use in a compiler for generating from a high level programming language, an assembly language listing of instructions for a programmable data processor, said compiler having

means for generating from said high level programming language input, an intermediate representation of the programming language input, said intermediate representation having a prefix grammar and represented by a canonical tree having a plurality of nodes, and

means for generating from said intermediate representation, an assembly language representation of the programming language input,

a code generator comprising

means responsive to productions of said prefix grammar for generating a state table and an extended state table, said productions being representative of a machine description for a target machine, and

means for generating, in response to said tables, a transition table, said transition table including for each entry, an operator identification, previous states of subtree leaves, and the resulting state at a tree node associated with the operator.

5. The code generator generator of claim 4 further comprising

means for generating a production to machine code translation table for instructing a code generator of the machine code to generate when a production is recognized.

6. The code generator generator of claim 4 further comprising

means for associating with each nonterminal of said productions, a state number and an extended state list from said extended state table.

7. A method for generating, from a high level programming language, an assembly language listing of instructions for a programmable data processor, said method comprising the steps of

generating from said high level programming language input a lower level intermediate representation of the programming language input,

generating from said intermediate representation, said assembly language listing representing the high level programming language input,

said assembly language generating step comprising the steps of

generating an input tree node structure for said intermediate representation,

parsing said intermediate representation by

assigning to said tree node structure, in an upward pass, a state value for each said node of said node structure,

parsing said intermediate representation during a second downward pass through said tree structure, said downward parsing employing the state values assigned during said previous upward parsing pass, and

generating said assembly language listing from said parsed intermediate representation.

8. The method of claim 7 further comprising the steps of

generating for said intermediate representation a prefix grammar, and

said parsing step being responsive to a state table, an extended state table, and a transition table generated from said state tables.

9. The method of claim 8 further comprising the steps of

representing said intermediate representation by a canonical tree having a plurality of nodes, and

wherein said transition table includes for each of a plurality of table entries, an operator identification, a previous state of the subtree leaves, and a resulting state of a current tree node associated with said operator.

10. A method for generating input data tables for a code generator for use in a compiler for generating from a high level programming language an assembly language listing of instructions for a programmable data processor, the compiler having means for generating from the high level programming language input, an intermediate representation of the programming language input, said intermediate representation having a prefix grammar and represented by a canonical tree having a plurality of nodes, and said method comprising the steps of

responding to productions for said prefix grammar, and

generating, in response to said productions, a state table, an extended state table, and a state transition table, said transition table including for each of a plurality of entries, an operator identification, previous states of subtree leaves, and the resulting state at a current tree node associated with the operator.

11. The code generator generation method of claim 10 further comprising

generating a production to machine code translation table for instructing a code generator of the code to generate when a production is recognized.

12. The code generator generation method of claim 11 further comprising

generating items from said productions for forming said state table,

generating extended item lists for forming said extended state table, and

associating with each nonterminal, a state number and a corresponding extended item list.

13. Compiler apparatus for generating, form signals in high level programming format, corresponding signals in a low level programming format, the apparatus comprising:

means for generating an input tree structure having a plurality of nodes corresponding to an intermediate level representation,

an upward pass parsing element for assigning, in an upward pass of the tree structure, a state value for each of the nodes,

a downward pass parsing element for parsing the intermediate representation during a downward pass through the tree, which element uses the state values assigned in the upward parsing pass, and

elements responsive to the downward pass parsing element for generating the low level format signals from the parsed intermediate representation.

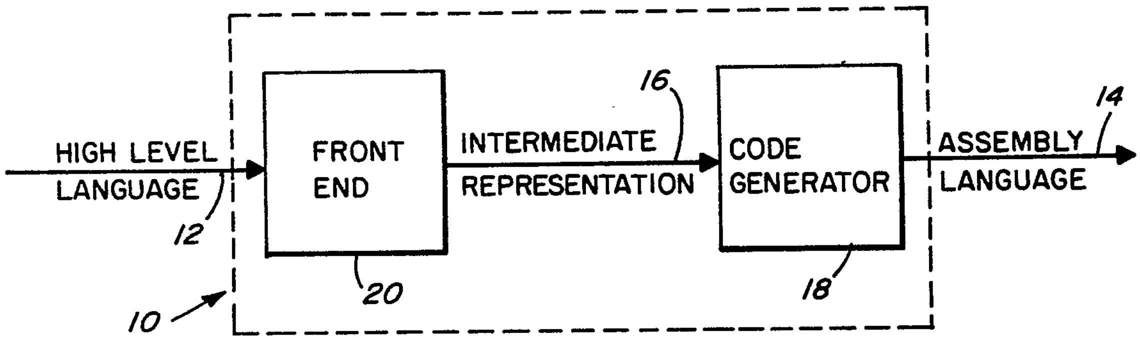


FIG. 1

| k | l | | |
|---|---|---|---|
| - 1 | 2 | | |
| - 2 | 3 | | |
| - 3 | 3 | | |
| - 4 | 3 | | |
| - 5 | 3 | | |
| - 6 | 3 | | |
| + 1 1 | 4 | = 1 1 | 6 |
| + 1 2 | 5 | = 1 2 | 3 |
| + 1 3 | 3 | = 1 3 | 3 |
| + 1 4 | 3 | = 1 4 | 6 |
| + 1 5 | 3 | = 1 5 | 6 |
| + 1 6 | 3 | = 1 6 | 3 |
| + 2 1 | 3 | = 2 1 | 3 |
| + 2 2 | 3 | = 2 2 | 3 |
| + 2 3 | 3 | = 2 3 | 3 |
| + 2 4 | 3 | = 2 4 | 3 |
| + 2 5 | 3 | = 2 5 | 3 |
| + 2 6 | 3 | = 2 6 | 3 |
| + 3 1 | 3 | = 3 1 | 3 |
| + 3 2 | 3 | = 3 2 | 3 |
| + 3 3 | 3 | = 3 3 | 3 |
| + 3 4 | 3 | = 3 4 | 3 |
| + 3 5 | 3 | = 3 5 | 3 |
| + 3 6 | 3 | = 3 6 | 3 |
| + 4 1 | 4 | = 4 1 | 3 |
| + 4 2 | 5 | = 4 2 | 3 |
| + 4 3 | 3 | = 4 3 | 3 |
| + 4 4 | 3 | = 4 4 | 3 |
| + 4 5 | 3 | = 4 5 | 3 |
| + 4 6 | 3 | = 4 6 | 3 |
| + 5 1 | 4 | = 5 1 | 3 |
| + 5 2 | 5 | = 5 2 | 3 |
| + 5 3 | 3 | = 5 3 | 3 |
| + 5 4 | 3 | = 5 4 | 3 |
| + 5 5 | 3 | = 5 5 | 3 |
| + 5 6 | 3 | = 5 6 | 3 |
| + 6 1 | 3 | = 6 1 | 3 |
| + 6 2 | 3 | = 6 2 | 3 |
| + 6 3 | 3 | = 6 3 | 3 |
| + 6 4 | 3 | = 6 4 | 3 |
| + 6 5 | 3 | = 6 5 | 3 |
| + 6 6 | 3 | = 6 6 | 3 |

FIG. 2

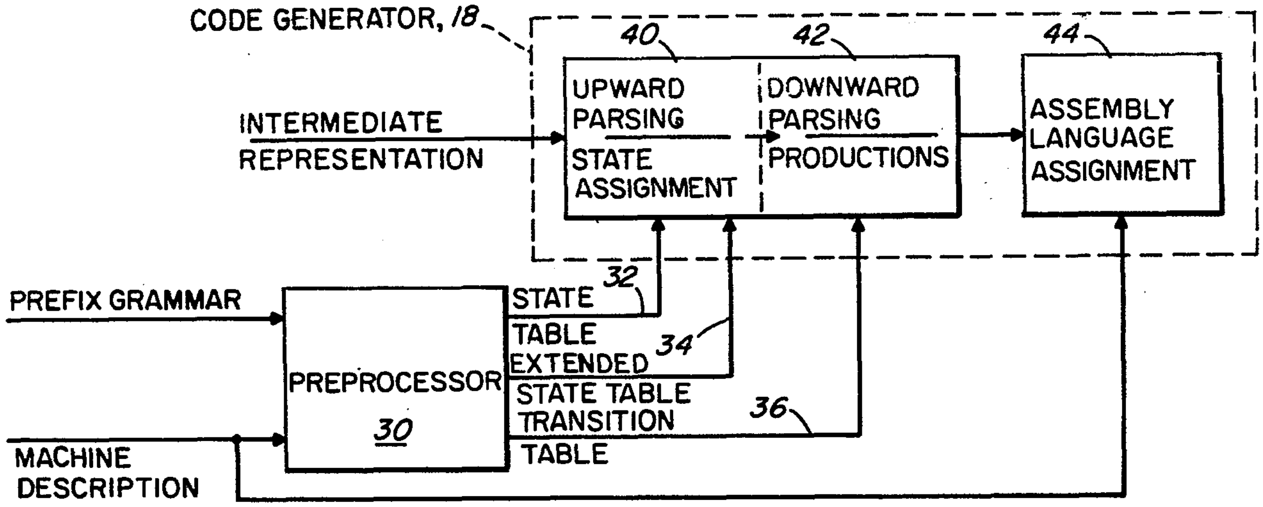


FIG. 4

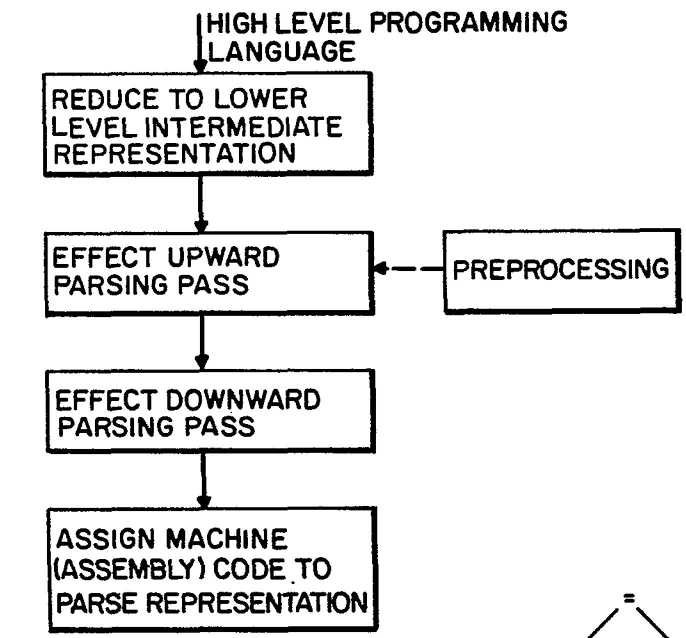


FIG. 5

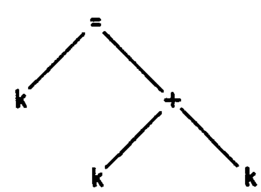


FIG. 3a

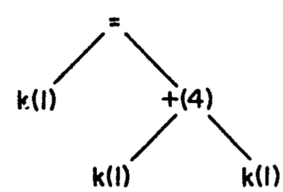


FIG. 3c

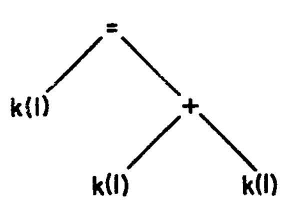


FIG. 3b

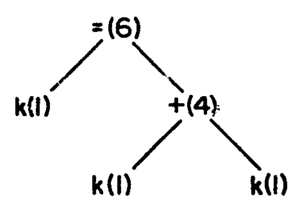


FIG. 3d